# EUROPEAN PATENT APPLICATION

(11) **EP 3 059 662 A1**
(43) Date of publication of application: **24.08.2016**
(21) Application number: 16156905.8
(22) Date of filing: 23.02.2016
(51) Int. Cl.: G06F 3/01, G06F 3/03, G06K 9/00, G06T 19/00

(54) **A METHOD FOR INTERACTING WITH VOLUMETRIC IMAGES BY GESTURES AND A SYSTEM FOR INTERACTING WITH VOLUMETRIC IMAGES BY GESTURES**

(30) Priority: 23.02.2015 PL 41133715
(71) Applicant: Samsung Electronics Polska Sp. z o.o., 02-674 Warszawa (PL)
(72) Inventor: Chmielewski, Radoslaw Pawel, 93-509 Lodz (PL)
(74) Representative: Eupatent.pl

(57) **Abstract**

A method for interacting with volumetric images by gestures, comprising: processing the volumetric images, in a processing unit (110) provided with a processor (111) and a memory (112), in response to user's hand gestures received by a camera (130), connected to the processing unit (110) and configured to measure image depth; and displaying the processed images on a display unit (120) connected to the processing unit (110). The following steps are performed in the processing unit (110): receiving, from the camera (130), a signal representing a series of depth maps in a form of bitmaps for an empty area, calculating an averaged depth map (ADM) and storing the averaged depth map (ADM) in the memory (112); receiving, from the camera (130), a signal representing a current depth map (CDM) in a form of a bitmap; calculating a differential depth map (DDP) representing a difference between the current depth map (CDM) and the averaged depth map (ADM); selecting, in the differential depth map (DDM), a pixel that is the nearest to a camera eye and pixels distant from it by a predetermined threshold value range, and storing the selected pixels as a selected depth map (SDM); determining a value of an average inequality of a manipulating plane (MP) located between the points of the selected depth map (SDM); determining a type of the user's hand gesture: as a grab gesture, when the average inequality of the manipulating plane (MP) is higher than a predetermined upper threshold value of a gesture; and as a flat hand gesture, when the average inequality of the manipulating plane (MP) is lower than a predetermined lower threshold value of a gesture; determining a section plane having four vertices (W1, W2, W3, W4) and superimposing the section plane over the volumetric image; changing the position of the section plane depending on the received user's hand gestures; and displaying, on the display unit, the volumetric image in a section corresponding to the current position of the section plane.

## Description

### TECHNICAL FIELD

The present invention relates to a method and system for interacting with volumetric images, to be used in particular in medical applications.

### BACKGROUND

The presented system and method relate to touchless processing of volumetric images by gestures. The volumetric images may be images comprising a series of object sections, such as a section of a body or a particular body organ, that define this object in a three-dimensional space. This type of images may be acquired by devices such as a computer tomography (CT) scanner or a magnetic resonance imaging (MRI) tomograph.

There is a need to provide a method and a system for interacting with volumetric images, in particular images acquired by medical devices, which would be easy and intuitive to use.

### SUMMARY

There is disclosed a method for interacting with volumetric images by gestures, comprising: processing the volumetric images, in a processing unit provided with a processor and a memory, in response to user's hand gestures received by a camera, connected to the processing unit and configured to measure image depth; and displaying the processed images on a display unit connected to the processing unit. The following steps are further performed in the processing unit : receiving, from the camera, a signal representing a series of depth maps in a form of bitmaps for an empty area, calculating an averaged depth map and storing the averaged depth map in the memory; receiving, from the camera, a signal representing a current depth map in a form of a bitmap; calculating a differential depth map representing a difference between the current depth map and the averaged depth map; selecting, in the differential depth map, a pixel that is the nearest to a camera eye and pixels distant from it by a predetermined threshold value range, and storing the selected pixels as a selected depth map; determining a value of an average inequality of a manipulating plane located between the points of the selected depth map; determining a type of the user's hand gesture: as a grab gesture, when the average inequality of the manipulating plane is higher than a predetermined upper threshold value of a gesture; and as a flat hand gesture, when the average inequality of the manipulating plane is lower than a predetermined lower threshold value of a gesture; determining a section plane having four vertices and superimposing the section plane over the volumetric image; changing the position of the section plane depending on the received user's hand gestures; and displaying, on the display unit, the volumetric image in a section corresponding to the current position of the section plane.

The method ma further comprise transforming the averaged depth map to a smoothed averaged depth map (SADM) by removing from it pixels having a distance from the camera which is higher than a predetermined value of visibility threshold, and calculating the differential depth map as representing the difference between the current depth map and the averaged depth map.

The predetermined threshold value range may have a value corresponding to a real distance of 10 to 30 cm.

In case of having determined a grab gesture, the method may comprise analysing further signals representing the current depth map, determining an angle of user's hand rotation around the coordinate axis, and changing the position of the section plane correspondingly.

In case of having determined a flat hand gesture, the method may comprise analysing further signals representing the current depth map, determining an angle of user's hand rotation around the coordinate axis, and changing the position of the section plane correspondingly.

There is also disclosed a system for interacting with volumetric images by gestures, the system comprising a processing unit provided with a processor and a memory configured to process the volumetric images and to display the volumetric images on a display unit connected to the processing unit in a response to determined user's hand gestures, and a camera configured to measure depth and connected to the processing unit. The processing unit is configured to perform the steps of the following method: receiving, from the camera, a signal representing a series of depth maps in a form of bitmaps for an empty area, calculating an averaged depth map and storing the averaged depth map in the memory; receiving, from the camera, a signal representing a current depth map in a form of a bitmap; calculating a differential depth map representing a difference between the current depth map and the averaged depth map; selecting, in the differential depth map, a pixel that is the nearest to a camera eye and pixels distant from it by a predetermined threshold value range, and storing the selected pixels as a selected depth map; determining a value of an average inequality of a manipulating plane located between the points of the selected depth map; determining a type of the user's hand gesture: as a grab gesture, when the average inequality of the manipulating plane is higher than a predetermined upper threshold value of a gesture; and as a flat hand gesture, when the average inequality of the manipulating plane is lower than a predetermined lower threshold value of a gesture; determining a section plane having four vertices (W1, W2, W3, W4) and superimposing the section plane over the volumetric image; changing the position of the section plane depending on the received user's hand gestures; and displaying, on the display unit, the volumetric image in a section corresponding to the current position of the section plane.

### BRIEF DESCRIPTION OF DRAWINGS

The system and method are presented by means of example embodiments in a drawing, in which:
Fig. 1 presents a general schematic of a system for interacting with volumetric images;
Fig. 2 presents a flowchart of a method for detecting user gestures;
Fig. 3A-3E present examples of depth maps;
Fig. 4 presents an example of a set of section images;
Fig. 5A-5C present examples of visualisations of volumetric images.

### DETAILED DESCRIPTION

The system and method as described herein may be applied in peripheral devices that can display medical images on a display unit, for example on television sets. Such device should be provided with a processing unit to perform algorithms described herein, a display unit and a camera for extraction of a depth map.

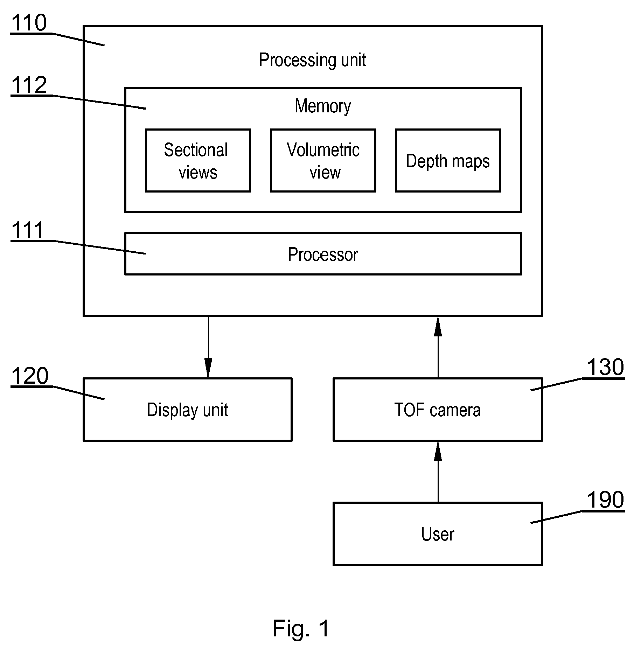

A schematic of a system for interacting with volumetric images is presented in Fig. 1. The system comprises a processing unit 110, connected to an image display unit 120 and to a camera 130 for a measurement of depth. The camera 130 is a TOF-type camera (Time of Flight), which determines a distance between its lens and an observed area and calculates the travel time of light signal between the lens and every examined point of the observed area. Various known TOF cameras can be used, for example Kinect available from Microsoft or Senz3D available from Creative. The camera further comprises an accelerometer 131 for calculating the angle of inclination of the camera with respect to the vector of gravity. Other types of cameras can be used as well, for example LIDAR (Light Detection and Ranging) cameras, stereoscopic cameras or pattern projectors.

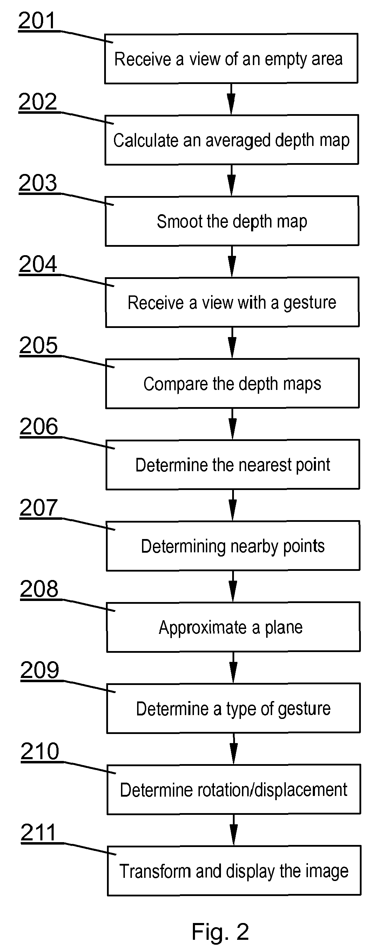

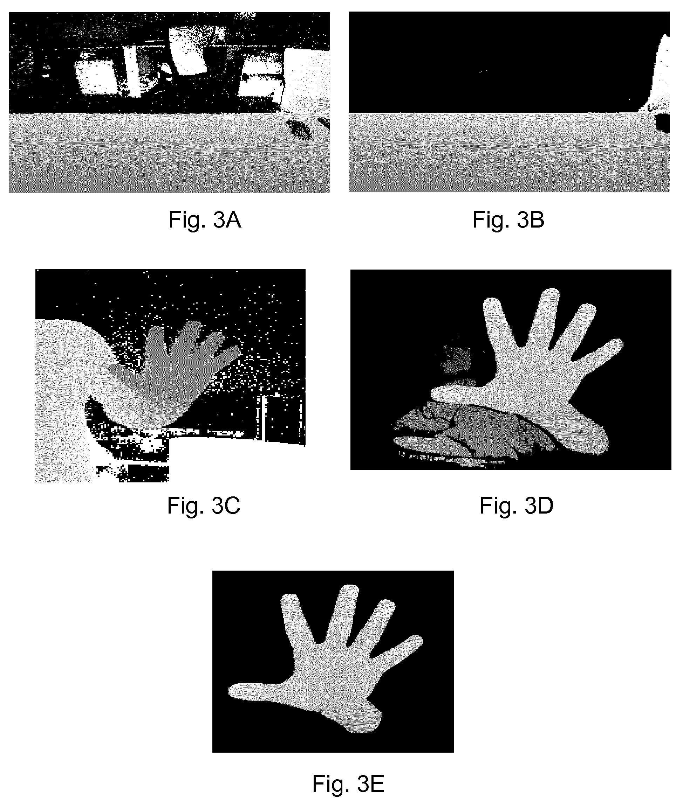

Fig. 2 presents a flowchart of a method for detecting user gestures. In step 201 from the camera 130 there is acquired an image of the observed area for an empty area (i.e. an area without a user present) and a depth map for this image. The depth map may have a form of a bitmap having a resolution equal to the resolution of the image, wherein each depth map pixel determines a distance of a particular image point from the camera eye. An example of such depth map is presented in Fig. 3A. Subsequently, in step 202, an average depth value for each pixel is calculated as an average value for the recently received image and previously received images. The steps 201-202 are iterated n times, preferably at least 30 times, to receive average depth values for each pixel for at least 30 successive images, in order to eliminate possible noise and errors. The steps 201-202 may be therefore determined as a stage of initial system calibration. The result of steps 201-202 is an averaged depth map (ADM). In step 203, within the averaged depth map, there may be removed pixels having a distance from the camera higher than a predetermined value of visibility threshold, that is higher than a distance within which the user's hand is expected to be present to manipulate the system. As a result, a smoothed averaged depth map (SADM) is received, as shown for example in Fig. 3B. Next, in step 204, a further image from the camera is received, now with a user present in the image, that constitutes a current depth map (CDM) depicted for example in Fig. 3C (in a slightly enlarged view). In step 205, the current depth map (CDM) is compared with the smoothed averaged depth map (SADM), for example by determining differences between the values of pixels, to obtain a differential depth map (DDM), such as shown for example in Fig. 3D. In this manner, information about new points in the camera view is obtained, which may include for example a user's hand. Next, in step 206, it is determined which point of the DDM is the closest to the camera. In step 207, there are determined all other points, which are separated from the closest point by no more than a predetermined threshold range, wherein the threshold range value may correspond to an actual distance of for example from 10 to 30 cm, preferably 20 cm. As a result, a selected depth map (SDM) is obtained, as shown for example in Fig. 3E, wherein only the user's hand is visible. In step 208, a plane is approximated to the obtained set of vertices, using known algorithms, for example the least squares method, to calculate a manipulating plane (MP). In this step an equation of the manipulating plane (MP) can be determined, as well as the inequalities of the manipulating plane, i.e. an average distance of all points from the plane defined as an average inequality of the manipulating plane. On this basis, it is possible to determine whether the hand performs a "grab" gesture (then, the average inequality, i.e. average distance of all points from the manipulating plane MP is relatively large, i.e. larger than an upper threshold value of the gesture) or a flat hand (then, the average distance of all points from the manipulating plane MP is relatively small, i.e. smaller than a lower threshold value of the gesture). The gesture type is provided in step 209. When the upper threshold value of the gesture is larger than the lower threshold value of the gesture, then the plane inequalities having a value between the lower threshold value and the upper threshold value do not allow to determine the type of the gesture and the user needs to straighten or bend the hand to a higher extent, in order to show the gesture in a more clear manner. In an alternative situation, when the upper threshold value of the gesture is equal to the lower threshold value of the gesture, the problem of vague gestures does not occur. In step 210, a change of hand position for a particular gesture is calculated, in particular a rotation of the hand for the grab gesture is determined, and/or a displacement of the hand for the flat hand gesture. Based on the determined gesture type and the determined hand displacement/rotation, in step 211 a volumetric view is respectively transformed and is displayed on the display unit 120.

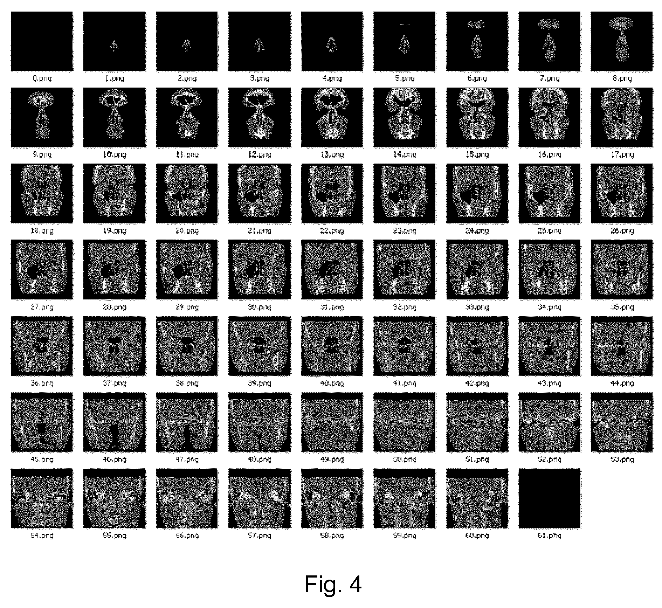

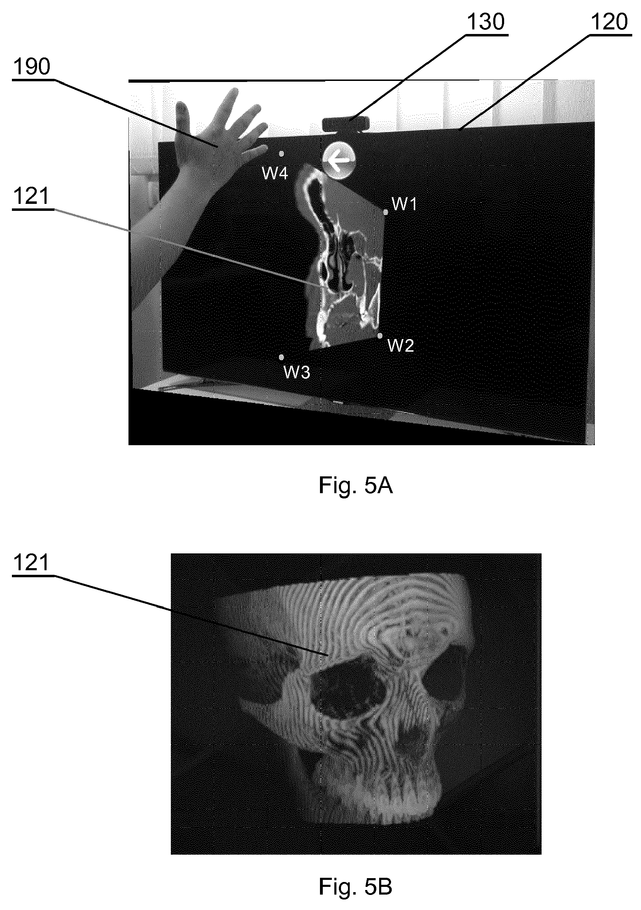

The system is designed to interact with volumetric medical data, such as for example a set of sectional views of an object such as a head depicted for example in Fig. 4. These views should be accompanied by information defining the actual size of the image, for example a height and a width of the view as well as a distance between consecutive views. The views can be then formed to a volumetric view, defined as a three-dimensional matrix of pixels, each having coordinates x, y, z and values corresponding to values from the sectional views. The volumetric view is displayed on a screen 120 and can be transformed according to user's gestures received by the camera 130. The volumetric view may be displayed in a section as shown in Fig. 5A or in a three-dimensional view (including, in addition, a sectional view) as shown in Fig. 5B.

In order to display the volumetric view 121 on the display unit 120, a section plane having 4 vertices W1, W2, W3, W4, is defined as shown in Fig. 5A. In order to generate another section, the coordinates of the plane position should be assigned to the coordinates of the volumetric view and data for corresponding pixels shall be obtained.

The transformations of the plane position are performed in response to interpretation of gestures made by the user's hand 190 and on this basis a corresponding section or a 3D view is displayed.

The 3D view might be displayed in a way as depicted in Fig. 5B, wherein points belonging to a current plane position are displayed with their original values, and points of each further plane are displayed with a decreased value, for example decreased value of brightness, as they move away from the camera. In this way, an effect of applying a "black fog" is obtained for the view and a pseudo-3D object is obtained, which can be conveniently analyzed by the user.

If the user performs a grab gesture, the change of the user's hand position causes a change of coordinate system angles for the plane. For example, the change of the user's hand position in the X axis causes a change of the horizontal angle, and a change of the hand position in the Y axis causes a change of the vertical angle.

In turn, if the user makes a gesture of an open hand, than the change of the hand position causes a change of the plane position with respect to the object, i.e. movement along X, Y or Z axis. In this manner the object can be moved on the screen and the position of the section of the object can be changed.

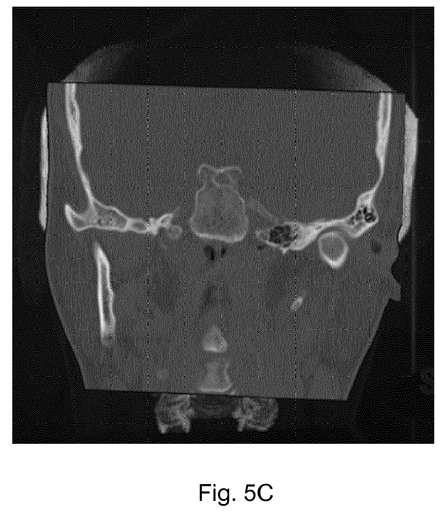

It is also possible to present the object as shown in Fig. 5C, wherein a section view is applied over the 3D view, according to the current plane position.

It can be easily recognized, by one skilled in the art, that the aforementioned method and system may be performed and/or controlled by one or more computer programs. Such computer programs are typically executed by utilizing the computing resources in a computing device, which can be incorporated in various devices, such as personal computers, personal digital assistants, cellular telephones, receivers and decoders of digital television, TVs, displays or the like. Applications are stored on a non-transitory medium. An example of a non-transitory medium is a non-volatile memory, for example a flash memory or volatile memory, for example RAM. The computer instructions are executed by data processing unit, such as a processor. These memories are exemplary recording media for storing computer programs comprising computer-executable instructions performing all the steps of the computer-implemented method according the technical concept presented herein.

## Claims

1. A method for interacting with volumetric images by gestures, comprising:
- processing the volumetric images, in a processing unit (110) provided with a processor (111) and a memory (112), in response to user's hand gestures received by a camera (130), connected to the processing unit (110) and configured to measure image depth; and
- displaying the processed images on a display unit (120) connected to the processing unit (110);
**characterized by** performing the following steps in the processing unit (110):
- receiving, from the camera (130), a signal representing a series of depth maps in a form of bitmaps for an empty area, calculating an averaged depth map (ADM) and storing the averaged depth map (ADM) in the memory (112);
- receiving, from the camera (130), a signal representing a current depth map (CDM) in a form of a bitmap;
- calculating a differential depth map (DDP) representing a difference between the current depth map (CDM) and the averaged depth map (ADM);
- selecting, in the differential depth map (DDM), a pixel that is the nearest to a camera eye and pixels distant from it by a predetermined threshold value range, and storing the selected pixels as a selected depth map (SDM);
- determining a value of an average inequality of a manipulating plane (MP) located between the points of the selected depth map (SDM);
- determining a type of the user's hand gesture:
- as a grab gesture, when the average inequality of the manipulating plane (MP) is higher than a predetermined upper threshold value of a gesture;
- and as a flat hand gesture, when the average inequality of the manipulating plane (MP) is lower than a predetermined lower threshold value of a gesture;
- determining a section plane having four vertices (W1, W2, W3, W4) and superimposing the section plane over the volumetric image;
- changing the position of the section plane depending on the received user's hand gestures; and
- displaying, on the display unit, the volumetric image in a section corresponding to the current position of the section plane.

2. The method according to claim 1, **characterised by** transforming the averaged depth map (ADM) to a smoothed averaged depth map (SADM) by removing from it pixels having a distance from the camera which is higher than a predetermined value of visibility threshold, and calculating the differential depth map (DDM) as representing the difference between the current depth map (CDM) and the averaged depth map (ADM).

3. The method according to any of previous claims, **characterised in that** the predetermined threshold value range has a value corresponding to a real distance of 10 to 30 cm.

4. The method according to any of previous claims, **characterised by**, in case of having determined a grab gesture, analysing further signals representing the current depth map, determining an angle of user's hand rotation around the coordinate axis, and changing the position of the section plane correspondingly.

5. The method according to any of previous claims, **characterised by**, in case of having determined a flat hand gesture, analysing further signals representing the current depth map, determining an angle of user's hand rotation around the coordinate axis, and changing the position of the section plane correspondingly.

6. A system for interacting with volumetric images by gestures, the system comprising a processing unit (110) provided with a processor (111) and a memory (112) configured to process the volumetric images and to display the volumetric images on a display unit (120) connected to the processing unit (110) in a response to determined user's hand gestures, and a camera (130) configured to measure depth and connected to the processing unit (110), **characterised in that**, the processing unit (110) is configured to perform the steps of the following method:
- receiving, from the camera (130), a signal representing a series of depth maps in a form of bitmaps for an empty area, calculating an averaged depth map (ADM) and storing the averaged depth map (ADM) in the memory (112);
- receiving, from the camera (130), a signal representing a current depth map (CDM) in a form of a bitmap;
- calculating a differential depth map (DDP) representing a difference between the current depth map (CDM) and the averaged depth map (ADM);
- selecting, in the differential depth map (DDM), a pixel that is the nearest to a camera eye and pixels distant from it by a predetermined threshold value range, and storing the selected pixels as a selected depth map (SDM);
- determining a value of an average inequality of a manipulating plane (MP) located between the points of the selected depth map (SDM);
- determining a type of the user's hand gesture:
- as a grab gesture, when the average inequality of the manipulating plane (MP) is higher than a predetermined upper threshold value of a gesture;
- and as a flat hand gesture, when the average inequality of the manipulating plane (MP) is lower than a predetermined lower threshold value of a gesture;
- determining a section plane having four vertices (W1, W2, W3, W4) and superimposing the section plane over the volumetric image;
- changing the position of the section plane depending on the received user's hand gestures; and
- displaying, on the display unit, the volumetric image in a section corresponding to the current position of the section plane.
